(19) Europäisches Patentamt / European Patent Office / Office européen des brevets

(11) **EP 3 006 230 B1**

(12) **EUROPEAN PATENT SPECIFICATION**

(45) Date of publication and mention
of the grant of the patent:
**04.10.2017 Bulletin 2017/40**

(21) Application number: **14803472.1**

(22) Date of filing: **02.06.2014**

(51) Int Cl.:
*B60C 9/18* *(2006.01)*         *B29D 30/06* *(2006.01)*
*B60C 11/00* *(2006.01)*        *B60C 11/02* *(2006.01)*

(86) International application number:
**PCT/JP2014/064655**

(87) International publication number:
**WO 2014/192962 (04.12.2014 Gazette 2014/49)**

(54) **TIRE AND TIRE MANUFACTURING METHOD**

REIFEN UND VERFAHREN ZUR HERSTELLUNG EINES REIFENS

PNEU ET PROCÉDÉ DE FABRICATION DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2013 JP 2013115819**

(43) Date of publication of application:
**13.04.2016 Bulletin 2016/15**

(73) Proprietor: **Bridgestone Corporation
Tokyo 104-8340 (JP)**

(72) Inventor: **IKUTA, Tomokatsu
Tokyo 104-8340 (JP)**

(74) Representative: **Oxley, Robin John George
Marks & Clerk LLP
90 Long Acre
London WC2E 9RA (GB)**

(56) References cited:
**WO-A1-2007/122687     WO-A1-2008/054387
WO-A1-2011/096235     JP-A- 2005 280 021
JP-A- 2005 280 021     JP-A- 2011 245 881
JP-A- 2011 245 881     JP-A- 2012 201 125**

## Description

### Technical Field

The present invention relates to a tire and a tire manufacturing method.

### Background Art

A conventional tire manufacturing method is known in which non-vulcanized bonding rubber is placed in a layer shape on an outer circumference of a fully vulcanized tire frame member, a fully vulcanized tread (what is referred to as a pre-cured tread (PCT)) is disposed thereon, the non-vulcanized bonding rubber layer is then vulcanized using a vulcanizing can or the like, and the tire frame member and the tread are vulcanization bonded through the bonding rubber layer. Such a tire manufacturing method is often employed when retreading tires that have been fully used (for example, Japanese Patent Application Laid-Open (JP-A) No. 2009-269424). Attention is also drawn to the disclosures of JP2011-245881 and JP2005-280021.

### SUMMARY OF INVENTION

### Technical Problem

However, in cases in which tires are manufactured using the above tire manufacturing method, slight gaps (gaps of approximately several hundred $\mu$m) sometimes occur between the bonding rubber layer and the tire frame member, or between the bonding rubber layer and the PCT, or between both, due to the shape of an outer circumferential face of the tire frame member, or the shape of an inner circumferential face of the PCT. These gaps are ameliorated by increasing the volume of the bonding rubber, namely, by increasing the thickness of the bonding rubber layer; however, the amount of heat generated increases when the volume of the bonding rubber is increased, such that there is a concern of a reduction in the durability of the tire due to thermal degradation.
An object of the present invention is to suppress a reduction in durability, while improving bonding properties between a tire frame member and a tread.

### Solution to Problem

A tire of a first aspect of the present invention is provided as claimed in claim 1.
A tire manufacturing method of a second aspect of the present invention is provided as claimed in claim 3.

### Advantageous Effects of Invention

The tire of the present invention enables a reduction in durability to be suppressed, while improving the bonding properties between the tire frame member and the tread.

### BRIEF DESCRIPTION OF DRAWINGS

Fig. 1 is an opened-out view of a tread, illustrating a tread pattern of an aircraft tire of a first exemplary embodiment, which is not according to the present invention.
Fig. 2 is a perspective view of a cross-section along line 2CS-2CS in Fig. 1.
Fig. 3 is an opened-out view of a tread, illustrating a tread pattern of an aircraft tire of a second exemplary embodiment, which is according to the present invention.
Fig. 4 is a perspective view of a cross-section along line 4CS-4CS in Fig. 3.

### DESCRIPTION OF EMBODIMENTS

### First Exemplary Embodiment

Explanation follows regarding an aircraft tire and an aircraft tire manufacturing method of a first exemplary embodiment, which is not according to the present invention.

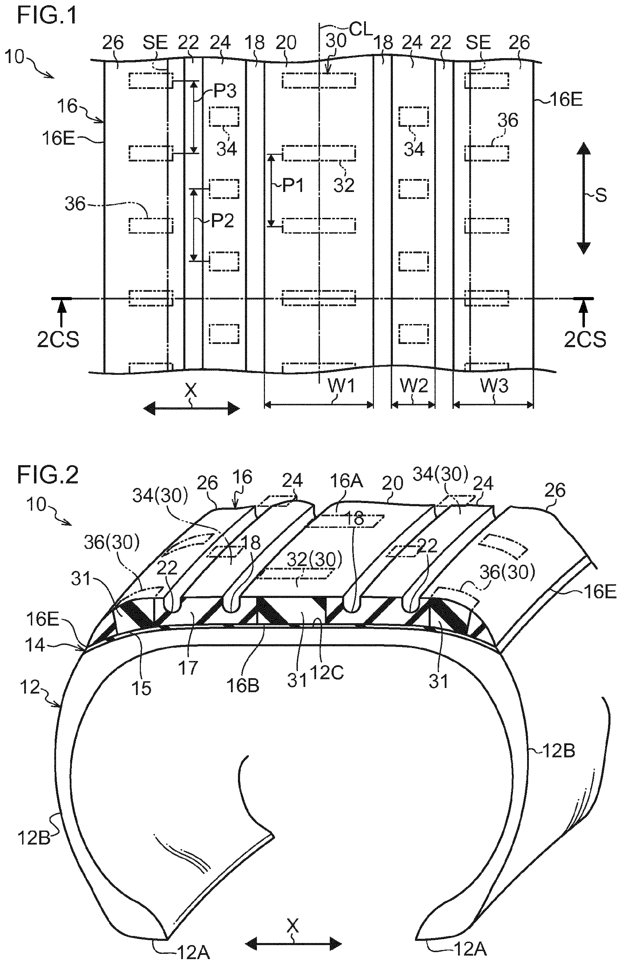

Fig. 1 is an opened-out view illustrating a tread 16 of an aircraft tire (hereafter simply referred to as "tire") 10 of the first exemplary embodiment. In Fig. 1, the arrow S indicates the tire circumferential direction, and the arrow X indicates the tire axial direction. The reference numeral CL indicates the tire equatorial plane. Note that in the present exemplary embodiment, the side along the tire axial direction that is near to the tire equatorial plane CL is referred to as the "tire axial direction inside", and sides along the tire axial direction that are on the far side from the tire equatorial plane CL are each referred to as the "tire axial direction outside". The reference numerals SE in Fig. 1 indicate ground contact edges of the tread 16. Note that "ground contact edges" referred to herein refer to the outermost ground contact points in the tire axial direction when the tire is fitted to a normal rim (standard rim) according to the standards set out in the Tire and Rim Association Inc. (TRA) Year Book or the European Tyre and Rim Technical Organisation (ETRTO) Year Book, the tire is inflated to an internal pressure of the air pressure (standard internal pressure) corresponding to the maximum load (standard load) on a single wheel of the applicable size set out in the same standard, and applied with the standard load for a single wheel of the applicable size set out in the same standard.

As illustrated in Fig. 2, the tire 10 includes a circular tire frame member 12, and the annular tread 16 that is vulcanization bonded to the tire frame member 12 with a cushioning rubber layer 14 interposed therebetween. Note that the cushioning rubber layer 14 of the present exemplary embodiment is an example of a bonding rubber layer in the present invention.

The tire frame member 12 forms a frame section of the tire 10, and is configured by bead portions 12A, side portions 12B, and a crown portion 12C. Although not illustrated in the drawings, conventionally known bead cores, a carcass ply, a belt ply, and the like are placed inside the tire frame member 12.

The tread 16 forms a ground contact section of the tire 10, and plural grooves extending around the tire circumferential direction are formed on the surface thereof. Specifically, as illustrated in Fig. 1, the tread 16 is provided with circumferential direction grooves 18 extending around the tire circumferential direction on both tire axial direction sides with the tire equatorial plane CL interposed therebetween, and is formed with a rib shaped center land portion 20 that is continuous around the tire circumferential direction between the pair of circumferential direction grooves 18. Note that the center land portion 20 is formed on the tire equatorial plane CL of the tread 16.

The tread 16 is also provided with circumferential direction grooves 22 extending around the tire circumferential direction at the tire axial direction outsides of the circumferential direction grooves 18, and is formed with rib-shaped intermediate land portions 24 that are each continuous around the tire circumferential direction between the respective circumferential direction grooves 18 and the circumferential direction grooves 22.

The tread 16 is also formed with rib-shaped shoulder land portions 26 that are each continuous around the tire circumferential direction at the tire axial direction outsides of the respective circumferential direction grooves 22.

As illustrated in Fig. 1, a width W1 of the center land portion 20 is wider than a width W2 of each intermediate land portion 24 and a width W3 of each shoulder land portion 26. Note that the width W1 of the center land portion 20 is the average value around the entire tire circumference of the length, measured along the tire axial direction, between intersection points between an extension line (not illustrated in the drawings) of the surface (tread face) of the center land portion 20, and respective extension lines (not illustrated in the drawings) of both side walls of the center land portion 20, in cross-section along the tire axial direction. The width W2 of each intermediate land portion 24 is the average value around the entire tire circumference of the length, measured along the tire axial direction, between an intersection point between an extension line (not illustrated in the drawings) of the surface (tread face) of the intermediate land portion 24 and an extension line (not illustrated in the drawings) of a side wall at the tire equatorial plane CL side of the intermediate land portion 24, and an intersection point between the extension line (not illustrated in the drawings) of the surface (tread face) of the intermediate land portion 24, and an extension line (not illustrated in the drawings) of a side wall at the ground contact edge SE side of the intermediate land portion 24, in cross-section along the tire axial direction. The width W3 of each shoulder land portion 26 is the average value around the entire tire circumference of the length, measured along the tire axial direction, between an intersection point between an extension line (not illustrated in the drawings) of the surface (tread face) of the shoulder land portion 26 and an extension line (not illustrated in the drawings) of a side wall of the shoulder land portion 26, and a tread end 16E, in cross-section along the tire axial direction.

As illustrated in Fig. 2, the cushioning rubber layer 14 is configured of a cushioning rubber 15 (an example of a bonding rubber) formed in a layer shape on an outer circumferential face of the tire frame member 12. The tread 16 and the tire frame member 12 are vulcanization bonded together by the cushioning rubber layer 14. Note that in the present exemplary embodiment, the hardness of the cushioning rubber 15 is set lower than the hardness of a tread rubber 17 that is a component of the tread 16. Note that "hardness" referred to in the present specification refers to the hardness specified by JIS K 6253 (type A durometer).

As illustrated in Fig. 2, the tread 16 is provided with cushioning rubber supplementation portions 30 that each extend in the tire radial direction from a tread surface 16A as far as the cushioning rubber layer 14, and pierce through the tread 16 in the thickness direction. Each cushioning rubber supplementation portion 30 is formed of an identical rubber material (cushioning rubber 31) as the cushioning rubber 15. Note that the cushioning rubber supplementation portions 30 of the present exemplary embodiment are each an example of a bonding rubber supplementation portion in the present invention.

The cushioning rubber supplementation portions 30 may also be said to be configured by filling the cushioning rubber 31 into through-holes formed in the thickness direction of the tread 16.

As illustrated in Fig. 1, plural of the cushioning rubber supplementation portions 30 are formed to the tread 16. Note that the cushioning rubber supplementation portions 30 may be regularly formed, or may be irregularly formed, to the tread 16, and the cushioning rubber supplementation portions 30 are regularly formed to the tread 16 in the present exemplary embodiment. Explanation follows regarding relationships between the respective cushioning rubber supplementation portions, in which the cushioning rubber supplementation portions 30 formed to the center land portion 20 are referred to as cushioning rubber supplementation portions 32, the cushioning rubber supplementation portions 30 formed to the intermediate land portions 24 are referred to as cushioning rubber supplementation portions 34, and the cushioning rubber supplementation portions 30 formed to the shoulder land portions 26 are referred to as cushioning rubber supplementation portions 36.

As illustrated in Fig. 1, the cushioning rubber supplementation portions 32, 34, 36 are formed at respective pitches (distances between the centers of cushioning rubber supplementation portions that are adjacent to each other in the tire circumferential direction) P1, P2, P3 in the tire circumferential direction. Note that in the present exemplary embodiment, the pitches P1, P2, P3 each have the same pitch; however, the present invention is not limited to this configuration, and the pitches may be different to each other. In the present exemplary embodiment, the cushioning rubber supplementation portions 32, 36 are disposed at the same positions in the tire circumferential direction, and the cushioning rubber supplementation portions 34 are disposed at different positions in the tire circumferential direction; however, the present invention is not limited to this configuration.

In the present exemplary embodiment, a size relationship of the volumes of the cushioning rubber supplementation portions 32, 34, 36 is proportionate to a width relationship of the widths W1, W2, W3 of the respective land portions. Note that in the present exemplary embodiment, the width W3 is wider than the width W2. However, the present invention is not limited to this configuration.

In the present exemplary embodiment, the modulus at 100% elongation of the cushioning rubber 15 that forms the cushioning rubber layer 14 ($A_M$), and the modulus at 100% elongation of the rubber that forms an inner circumferential face of the tread 16 (in other words, the rubber that forms the inner circumferential face of the tread 16) ($B_M$) satisfy the relationship in Equation (i) below:

$$60\% \leq A_M/B_M \leq 140\% \qquad \text{Equation (i)}$$

Note that when a ratio of the modulus at 100% elongation ($A_M$) with respect to the modulus at 100% elongation ($B_M$) ($A_M/B_M$) is less than 60%, or greater than 140%, a difference in rigidity occurs and strain is more liable to concentrate at an interface between the cushioning rubber layer 14 and an inner circumferential portion of the tread 16, such that the interface bonding properties are reduced, causing a reduction in durability. In cases in which the ratio ($A_M/B_M$) is less than 60%, there is a concern that strain increases at the cushioning rubber layer 14 itself, and a reduction in durability is more liable due to an increase in the amount of heat generated by the cushioning rubber 15.

It is therefore preferable that the modulus at 100% elongation of the cushioning rubber 15 ($A_M$) and the modulus at 100% elongation of the rubber configuring an outermost layer of the tire frame member 12 ($B_M$) satisfy the relationship in Equation (i). In particular, it is more preferable that the relationship in Equation (i-1) below is satisfied, from the perspective of securing bonding properties at the interface between the cushioning rubber layer 14 and the tread 16.

$$80\% \leq A_M/B_M \leq 120\% \qquad \text{Equation (i-1)}$$

Note that in the present exemplary embodiment, the tread 16 is formed of one type of rubber; however, the present invention is not limited to this configuration. For example, configuration may be such that the tread 16 is formed by layering plural types of rubber. In such cases, the rubber that forms an innermost layer of the tread 16 corresponds to the rubber that forms the inner circumferential portion of the tread 16.

Explanation follows regarding a manufacturing method of the tire 10 of the present exemplary embodiment.

Tire Frame Member Forming Process

First, a non-vulcanized tire frame member 12 is formed by a conventionally known method. As an example, the tire frame member 12 may be formed by respectively wrapping both end portions of a carcass ply (not illustrated in the drawings) around a pair of bead cores, then wrapping a belt ply (not illustrated in the drawings) about an outer circumference of a crown portion of the carcass ply. Note that one or plural of both the carcass ply and the belt ply may be placed, depending on the tire specification. In the above example, explanation regarding various tire configuration members, such as an inner liner, bead filler, and a side rubber, is omitted.

Next, a fully vulcanized tire frame member 12 may be formed by applying pressure or applying heat to the non-vulcanized tire frame member 12, using a vulcanization mold or vulcanization can.

The tire frame member 12 may also be formed by stripping a tread from a tire, when the tread has exceeded a stipulated amount of wear, or after a stipulated duration has elapsed. Note that a tire frame member formed by removing a fully used tread from a tire is referred to as a casing, and a tire in which a new, fully vulcanized tread has been adhered to the casing is referred to as a retreaded tire.

Tread Molding Process

Next, a non-vulcanized tread rubber 17 is applied with pressure or vulcanized to mold a fully vulcanized tread 16. Plural through-holes piercing through in the thickness direction are then formed in the fully vulcanized tread 16, and the through-holes are filled with non-vulcanized cushioning rubber 31 to form non-vulcanized cushioning rubber supplementation portions 30. The fully vulcanized tread 16 is accordingly formed including the cushioning rubber supplementation portions 30, in which the non-vulcanized cushioning rubber 31 are formed so as to extend from the tread surface 16A as far as a tread back face 16B. Note that the fully vulcanized tread 16 may be formed in a belt shape with ends, or in an endless belt shape.

Cushioning Rubber Placement Process

Next, non-vulcanized cushioning rubber 15 is placed in a layer shape around the outer circumferential face of the fully vulcanized tire frame member 12. A non-vulcanized cushioning rubber layer 14 is formed accordingly.

Tread Placement Process

Next, the fully vulcanized tread 16 is placed at the outer circumference of the non-vulcanized cushioning rubber layer 14.

Vulcanization Process

The tread 16 is then housed in a vulcanization can (not illustrated in the drawings) in a state pressed against the fully vulcanized tire frame member 12 with the cushioning rubber layer 14 interposed therebetween, and the non-vulcanized cushioning rubber 15 and the non-vulcanized cushioning rubber 31 are vulcanized. The tire frame member 12 is thereby vulcanization bonded to the tread 16 through the cushioning rubber layer 14, and the tire 10 is complete. During this vulcanization, the cushioning rubber 31 of the non-vulcanized cushioning rubber supplementation portions 30 is able to flow into the non-vulcanized cushioning rubber layer 14, such that, even supposing the volume of the non-vulcanized cushioning rubber 15 is insufficient, this insufficiency can be supplemented by the non-vulcanized cushioning rubber 31. This enables gaps to be suppressed from occurring in the non-vulcanized tire 10 between the cushioning rubber layer 14 and the tire frame member 12, and between the cushioning rubber layer 14 and the tread 16. Note that "fully vulcanized" referred to herein refers to a state in which the degree of vulcanization required of a final product has been reached, whereas a half-vulcanized state refers to a state in which the degree of vulcanization is higher than a non-vulcanized state, but has not reached the degree of vulcanization required of a final product.

Explanation follows regarding operational advantageous effects of the tire 10 of the present exemplary embodiment.

In the tire 10, the cushioning rubber supplementation portions 30 are formed to the tread 16, so as to pierce through the tread 16 and extend from the tread surface 16A as far as the cushioning rubber layer 14. Thus, when the fully vulcanized tire frame member 12 and the fully vulcanized tread 16 are vulcanization bonded through the non-vulcanized cushioning rubber layer 14, the non-vulcanized cushioning rubber 31 can flow into the non-vulcanized cushioning rubber layer 14 as described above, thereby enabling any insufficiency in the non-vulcanized cushioning rubber layer 14 to be supplemented. This enables gaps to be suppressed from occurring between the cushioning rubber layer 14 and the tire frame member 12, and between the cushioning rubber layer 14 and the tread 16, and enables the bonding properties of the tire frame member 12 and the tread 16 to be improved.

In the tire 10, any insufficiency in the non-vulcanized cushioning rubber layer 14 can be supplemented by the cushioning rubber 31 during vulcanization bonding, such that there is no need to increase the thickness of the non-vulcanized cushioning rubber layer 14 and increase the volume of the cushioning rubber 15. This enables a reduction in durability of the tire 10, caused by thermal degradation of the rubber due to an increase in the amount of heat generated, to be suppressed.

Second Exemplary Embodiment

Explanation follows regarding an aircraft tire and an aircraft tire manufacturing method of a second exemplary embodiment, which is according to the present invention. Note that similar configuration to the first exemplary embodiment is appended with the same reference numerals, and explanation thereof is omitted.

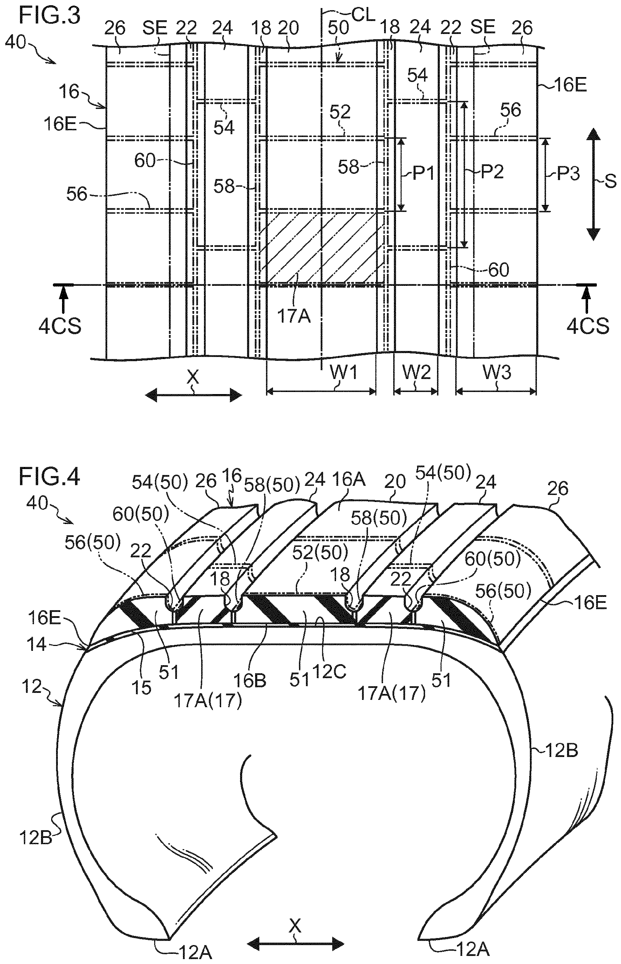

As illustrated in Fig. 3, a tire 40 of the present exemplary embodiment has a similar configuration to the tire 10 of the first exemplary embodiment, except in the respect that plural cushioning rubber supplementation portions 50 formed to the tread 16 each extend in one direction out of the tire circumferential direction, or a direction intersecting the tire circumferential direction. Configuration of the plural cushioning rubber supplementation portions 50 is therefore explained in detail below. Note that each cushioning rubber supplementation portion 50 of the present exemplary embodiment is an example of a bonding rubber supplementation portion in the present invention.

As illustrated in Fig. 3, the plural cushioning rubber supplementation portions 50 are formed to the tread 16. Explanation follows regarding relationships between the respective cushioning rubber supplementation portions, in which the cushioning rubber supplementation portions 50 formed to the center land portion 20 are referred to as cushioning rubber supplementation portions 52, the cushioning rubber supplementation portions 50 formed to the intermediate land portions 24 are referred to as cushioning rubber supplementation portions 54, the cushioning rubber supplementation portions 50 formed to the shoulder land portions 26 are referred to as cushioning rubber supplementation portions 56, the cushioning rubber supplementation portions 50 formed to groove bottoms of the circumferential direction grooves 18 are referred to as cushioning rubber supplementation portions 58, and the cushioning rubber supplementation portions 50 formed to groove bottoms of the circumferential direction grooves 22 are referred to as cushioning rubber supplementation portions 60.

Each cushioning rubber supplementation portion 58 is formed to the groove bottom center (the deepest groove portion) of the circumferential direction groove 18, and extends along the extension direction of the circumferential direction groove 18 (the tire circumferential direction in the present exemplary embodiment). Each cushioning rubber supplementation portion 60 is formed to the groove bottom center (the deepest groove portion) of the circumferential direction groove 22, and extends along the extension direction of the circumferential direction groove 22 (the tire circumferential direction in the present exemplary embodiment).

Each cushioning rubber supplementation portion 52 extends along the tire axial direction across the center land portion 20, and both ends thereof are linked to the respective cushioning rubber supplementation portions 58. Each cushioning rubber supplementation portion 54 extends along the tire axial direction across the intermediate land portion 24, with one end linked to the cushioning rubber supplementation portion 58, and the other end linked to the cushioning rubber supplementation portion 60. Each cushioning rubber supplementation portion 56 extends along the tire axial direction across the shoulder land portion 26, with one end linked to the cushioning rubber supplementation portion 60, and the other end linked to the tread end 16E (as a component of the tread end 16E).

As illustrated in Fig. 3, the cushioning rubber supplementation portions 52, 54, 56 are formed at respective pitches P1, P2, P3 in the tire circumferential direction. The pitches P1, P3 are narrower than the pitch P2. In the present exemplary embodiment, the cushioning rubber supplementation portions 52, 56 are disposed at the same positions in the tire circumferential direction, and the cushioning rubber supplementation portions 54 are disposed at different positions in the tire circumferential direction; however, the present invention is not limited to this configuration. It is preferable that the width in the short direction (the direction orthogonal to the extension direction) of each of the cushioning rubber supplementation portions 52 to 60 is set at 5 mm, or less.

Explanation follows regarding a manufacturing method of the tire 40 of the present exemplary embodiment. Note that explanation of the same processes as the manufacturing method of the tire 10 of the first exemplary embodiment is omitted.

Tread Molding Process

First, plural tile-shaped tread rubber pieces (illustrated by the reference numerals 17A in Fig. 3 and Fig. 4) that are components of the tread 16 after assembly are molded using the non-vulcanized tread rubber 17, and are each vulcanized. Note that the tread rubber pieces 17A of the present exemplary embodiment configure portions of the fully vulcanized tread 16 that has been divided into plural portions in the tire circumferential direction and the tire axial direction. Note that a double-dotted dashed line pattern has been added to one of the plural tread rubber pieces 17A in Fig. 3.

Next, the fully vulcanized tread rubber pieces 17A are aligned in the tire circumferential direction and aligned in the tire axial direction, and the tread 16 is molded (assembled). When this is performed, non-vulcanized cushioning rubber 51 is placed between fully vulcanized tread rubber pieces 17A that are adjacent to each other. Note that the tread 16 may be molded (may be assembled) by aligning the fully vulcanized tread rubber pieces 17A while adhering the non-vulcanized cushioning rubber 51 to the fully vulcanized tread rubber pieces 17A. A fully vulcanized tread 16 is thereby formed including cushioning rubber supplementation portions 50 in which the cushioning rubber 51 extends from the tread surface 16A as far as the tread back face 16B.

The fully vulcanized tread 16 is then disposed at the outer circumference of the tire frame member 12 with the non-vulcanized cushioning rubber layer 14 interposed therebetween, and the non-vulcanized cushioning rubber 15 and the non-vulcanized cushioning rubber 51 are vulcanized, such that tread 16 is vulcanization bonded to the tire frame member 12 through the cushioning rubber layer 14. The adjacent tread rubber pieces 17A are also vulcanization bonded together through the cushioning rubber 15. The tire 40 is accordingly complete.

Explanation follows regarding operational advantageous effects of the present exemplary embodiment. Note that explanation regarding operational advantageous effects that are also obtained by the tire 10 of the first exemplary embodiment is omitted.

In the tire 40, the cushioning rubber supplementation portions 58, 60 that each extend around the tire circumferential direction are formed to the respective circumferential direction grooves 18, 20, and the cushioning rubber supplementation portions 52, 54, 56 that each extend along the tire axial direction are formed to the respective center land portions 20, 24, 26. This enables the cushioning rubber 51 to uniformly supplement the cushioning rubber layer 14 over a wider range during vulcanization than in the tire 10 of the first exemplary embodiment, thereby enabling gaps to be effectively suppressed from occurring between the cushioning rubber layer 14 and the tire frame member 12, and between the cushioning rubber layer 14 and the tread 16.

The tread 16 of the first and second exemplary embodiments is configured only of rubber material (the tread rubber 17); however the present invention is not limited to this configuration, and a protective layer may be provided to an inner layer side (the back face side) of the tread 16. Cords (such as organic fiber cords) extending in a wave shape around the tire circumferential direction and formed aligned in the tire axial direction with intervals therebetween, for example, may be employed as the protective layer.

The tire 10 of the first exemplary embodiment and the tire 40 of the second exemplary embodiment are both aircraft tires; however, the present invention is not limited thereto. Tires of other exemplary embodiments of the present invention may be bus tires, truck tires, or construction vehicle tires, for example.

An exemplary embodiment has been explained above as an exemplary embodiment of the present invention; however, this exemplary embodiment is merely an example, and various modifications may be implemented within a range not departing from the present invention. Obviously the scope of rights of the present invention is not limited by these exemplary embodiments.

Test Examples

One type of tire that is an Example in the present invention, four types of tire that are Reference Examples that are not included in the present invention and two types of tire of Comparative Examples that are not included in the present invention were prepared, the below tests were carried out, and an evaluation was performed. Tires that each had a size of 30×8.8R15 16PR were employed as the sample tires. Note that Table 1 shows the manufacturing method, the type of tread rubber, and the type of cushioning rubber of each sample tire. The "manufacturing method B" shown in Table 1 indicates the tire manufacturing method of the first exemplary embodiment, and the "manufacturing method C" indicates the tire manufacturing method of the second exemplary embodiment. The "manufacturing method A" shown in Table 1 indicates a normal manufacturing method (a manufacturing method that is not included in the present invention) in which a belt-shaped pre-cured tread (PCT), without through-holes formed for supplementing a cushioning rubber, is wrapped onto a tire frame member (a casing) with a cushioning rubber layer interposed therebetween, and vulcanization is then performed using a vulcanization can to obtain a tire. Note that there is no cushioning rubber supplementation portion formed to the tires manufactured by the manufacturing method A, as is formed in the tires manufactured by the manufacturing method B and the manufacturing method C. Table 2 shows blending formulations of a rubber A to a rubber E employed as tread rubber and cushioning rubber of the sample tires.

Measurement of Modulus at 100% elongation

A rubber sheet with a thickness of 0.3 mm was cut out from respective locations of each sample tire and cut to form a test sample cut with a DIN 53504-S3A type cutter shape. Under a condition of a stretch speed of 100 mm per minute, the modulus at 100% elongation of the cushioning rubber forming the cushioning rubber layer ($A_M$) and the modulus at 100% elongation of the rubber forming the inner circumferential portion of the tread ($B_M$) were measured for each sample, and the ratio of the moduli at 100% ($A_M B_M$) was derived, as shown in Table 1. Table 1 also shows whether or not each sample tire satisfies Equation (i).

Drum Durability Test

Next, each sample tire was fitted to a standard rim, then attached to a drum test machine and one cycle of test "TSO-C62 d" approved by the U.S. Federal Aviation Administration (FAA) was performed. Durability testing was implemented in which the proportion of a surface area of damaged portions with respect to a surface area without damaged portions on a tread interface (the interface between the tread and the cushion layer) was visually evaluated. The test results for the respective sample tires are shown in Table 1 as indices, with the test result of the Comparative Example 1 as a reference value (100). Note that the higher the value of the durability test result shown in Table 1, the better the result.

Table 1

| | Comparative Example 1 | Comparative Example 2 | Reference Example 1 | Example 2 | Reference Example 3 | Reference Example 4 | Reference Example 5 |
|---|---|---|---|---|---|---|---|
| Tire manufacturing method | Manufacturing method A | Manufacturing method A | Manufacturing method B | Manufacturing method C | Manufacturing method B | Manufacturing method B | Manufacturing method B |
| Tread rubber | Rubber A | Rubber A | Rubber A | Rubber A | Rubber A | Rubber A | Rubber A |
| Cushioning rubber | Rubber B | Rubber C | Rubber B | Rubber B | Rubber C | Rubber D | Rubber E |
| Ratio ($A_M$/$B_M$) (%) | 100 | 50 | 100 | 100 | 50 | 130 | 150 |
| Is Equation (i) satisfied? | YES | NO | YES | YES | NO | YES | NO |
| Durability | 100 | 90 | 140 | 146 | 105 | 113 | 108 |

Table 2

| | | | Rubber A | Rubber B | Rubber C | Rubber D | Rubber E |
|---|---|---|---|---|---|---|---|
| Blending formulation | Polymer NR*1 | | 100 | 100 | 100 | 100 | 100 |
| | Carbon | SAF*2 | 50 | - | - | - | - |
| | | HAF*3 | - | 45 | 45 | 45 | 45 |
| | Oil*4 | | - | - | 8 | - | - |
| | Zinc oxide *5 | | 5 | 5 | 5 | 5 | 5 |
| | Stearic acid *6 | | 2 | 2 | 2 | 2 | 2 |
| | Anti-aging agent *7 | | 1 | 1 | 1 | 1 | 1 |
| | WAX *8 | | 1 | - | - | - | - |
| | Vulcanization agent *9 | | 1.5 | 1.5 | 1 | 1.5 | 2 |
| | Insoluble sulfur *10 | | 2 | 3 | 2 | 4 | 4 |

*1: RSS # 3
*2: Manufactured by Tokai Carbon Co. Ltd., trade name: SEAST 9 (registered trademark)
*3: Manufactured by Tokai Carbon Co. Ltd., trade name: SEAST 3 (registered trademark)
*4: Manufactured by Shell, trade name: Flavex 595
*5: Manufactured by Hakusuitech Co., Ltd., no. 3 zinc oxide
*6: Manufactured by New Japan Chemical Co., Ltd., stearic acid # 50S
*7: Manufactured by Ouchi Shinko Chemical Industrial Co., Ltd., trade name:Ncoceler 6C, (N-phenyl-N'-1,3-dimethylbutyl-p-phenylenediamine)
*8: Manufactured by Nippon Seiro Co., Ltd., trade name: Ozoace-0280
*9: Manufactured by Ouchi Shinko Chemical Industrial Co., Ltd., trade name: Nocceler-CZ, N-Cyclohexyl-2-benzothiazolesulfenamide
*10: Manufactured by Nippon Kanryu Industry Co., Ltd., trade name: Seimi sulfur

As illustrated in Table 1, each of the tires of the examples 1 to 5 has better durability than the tires of the Comparative Example 1 and the Comparative Example 2. It is conceivable that this is because the tires manufactured by the manufacturing method B and the manufacturing method C in the present invention have improved bonding properties between the tread and the tire frame member through the cushioning rubber layer, due to improved bonding properties between the tread and the cushioning rubber layer, such that the durability has improved as a result.

Although the tire of the Comparative Example 1 and the tire of the Comparative Example 2 are both manufactured by the manufacturing method A, the tire of the Comparative Example 1 has obtained a better durability result than the tire of the Comparative Example 2. It is conceivable that this is because the tire of the Comparative Example 1 satisfies Equation (i), whereas the tire of the Comparative Example 2 does not satisfy Equation (i). Specifically, in the tire of the Comparative Example 2, it is conceivable that the modulus at 100% elongation (AM) of the rubber C that is a component of the cushioning rubber is too high compared to that of the rubber A that is a component of the tread rubber, such that a large difference in rigidity has occurred and strain is more liable to concentrate at the tread interface.

When the tire of the Comparative Example 2 and the tire of the Reference Example 3 are compared, although neither the tire of the Comparative Example 2 nor the tire of the Reference Example 3 satisfy Equation (i), the tire of the Reference Example 2 obtained a better durability result than the tire of the Comparative Example 2. It is conceivable that this is because a difference in the bonding properties at the tread interface occurred, due to the tire of the Comparative Example 2 being manufactured by the manufacturing method A, whereas the tire of the Reference Example 3 was manufactured by the manufacturing method B.

When the tire of the Comparative Example 2 is compared with the tire of the Reference Example 1 and the tire of the Example 2, the tire of the Reference Example 1 and the tire of the Example 2 have much better durability than the tire of the Comparative Example 2. It is conceivable that this is because the tire of the Reference Example 1 and the tire of the Example 2 were respectively manufactured by the manufacturing method B and the manufacturing method C in the present invention, and satisfy Equation (i).

## Claims

1. A tire (40), comprising:

a circular tire frame member (12);
a tread (16) that is vulcanization bonded to an outer circumference of the tire frame member (12) via a bonding rubber layer (14); and
a bonding rubber supplementation portion (50) that is provided at the tread (16), that extends from a tread surface (16A) to the bonding rubber layer (14), and that is formed of an identical rubber material to the bonding rubber layer (14), wherein:

a plurality of the bonding rubber supplementation portions (50) are provided at the tread (16); and
at least one of the plurality of bonding rubber supplementation portions (50) extends in a tire circumferential direction (S), and at least one of the plurality of bonding rubber supplementation portions (50) extends in a direction intersecting the tire circumferential direction (S).

2. The tire of claim 1, wherein the modulus at 100% elongation of the bonding rubber layer ($A_M$) and the modulus at 100% elongation of an inner circumferential portion of the tread ($B_M$) satisfy the relationship of the following Equation (i):

$$\text{Equation (i)} \qquad 60\% \leq A_M/B_M \leq 140\%.$$

3. A tire manufacturing method, comprising:

arranging non-vulcanized bonding rubber in a layer shape at an outer circumference of a fully vulcanized tire frame member (12);
arranging a fully vulcanized tread (16), including a bonding rubber supplementation portion (50) that is formed by a non-vulcanized rubber material that is identical to the bonding rubber and that extends from a tread surface (16A) to a tread back face, at an outer circumference of the bonding rubber; and
vulcanizing the bonding rubber and the rubber material, wherein:

a plurality of the bonding rubber supplementation portions (50) are provided at the tread (16); and
at least one of the plurality of bonding rubber supplementation portions (50) extends in a tire circumferential direction (S), and at least one of the plurality of bonding rubber supplementation portions (50) extends in a direction intersecting the tire circumferential direction (S).

## Patentansprüche

1. Reifen (40), umfassend:

ein kreisförmiges Reifenrahmenelement (12);
eine Lauffläche (16), welche durch Vulkanisation mit einem äußeren Umfang des Reifenrahmenelements (12) über eine Verbindungsgummischicht (14) verbunden ist; und
einen Verbindungsgummizusatzabschnitt (50), welcher an der Lauffläche (16) angeordnet ist, welcher sich von einer Lauffläche (16A) zur Verbindungsgummischicht (14) erstreckt und welcher aus demselben Gummimaterial wie das der Verbindungsgummischicht (14) gebildet ist, wobei:

eine Mehrzahl der Verbindungsgummizusatzabschnitte (50) an der Lauffläche (16) angeordnet ist; und
zumindest einer der Mehrzahl von Verbindungsgummizusatzabschnitten (50) sich in einer Reifenumfangsrichtung (S) erstreckt, und zumindest einer der Mehrzahl von Verbindungsgummizusatzabschnitten (50) sich in einer Richtung erstreckt, welche die Reifenumfangsrichtung (S) schneidet.

2. Reifen nach Anspruch 1, wobei der Modul bei 100%-Ausdehnung der Verbindungsgummischicht ($A_M$) und der Modul bei 100%-Ausdehnung eines inneren Umfangsabschnitts der Lauffläche ($B_M$) die Beziehung gemäß folgender Gleichung (i) erfüllen:

$$\text{Gleichung (i)} \quad 60\% \leq A_M/B_M \leq 140\%.$$

**3.** Verfahren zum Herstellen eines Reifens, umfassend:

Anordnen eines nichtvulkanisierten Verbindungsgummis in der Form einer Schicht am äußeren Umfang eines vollständig vulkanisierten Reifenrahmenelements (12);
Anordnen einer vollständig vulkanisierten Lauffläche (16), umfassend einen Verbindungsgummizusatzabschnitt (50), welcher aus einem nichtvulkanisierten Gummimaterial gebildet ist, welches dem Verbindungsgummi identisch ist, und sich von einer Lauffläche (16A) zu einer Laufflächenrückseite erstreckt, an einem Außenumfang des Verbindungsgummis; und
Vulkanisieren des Verbindungsgummis und des Gummimaterials, wobei:

eine Mehrzahl der Verbindungsgummizusatzabschnitte (50) an der Lauffläche (16) angeordnet ist; und
zumindest einer der Mehrzahl von Verbindungsgummizusatzabschnitten (50) sich in einer Reifenumfangsrichtung (S) erstreckt, und zumindest einer der Mehrzahl von Verbindungsgummizusatzabschnitten (50) sich in einer Richtung erstreckt, welche die Reifenumfangsrichtung (S) schneidet.

## Revendications

**1.** Bandage pneumatique (40), comprenant:

un élément de cadre circulaire du bandage pneumatique (12) ;
une bande de roulement (16) reliée par vulcanisation à une circonférence externe de l'élément de cadre du bandage pneumatique (12) par l'intermédiaire d'une couche de caoutchouc de liaison (14) ; et
une partie de renforcement du caoutchouc de liaison (50) agencée au niveau de la bande de roulement (16), s'étendant d'une surface de la bande de roulement (16A) vers la couche de caoutchouc de liaison (14) et composée d'un matériau de caoutchouc identique à celui de la couche de caoutchouc de liaison (14) ; dans lequel :

plusieurs parties de renforcement du caoutchouc de liaison (50) sont agencées a niveau de la bande de roulement (16) ; et
au moins une des plusieurs parties de renforcement du caoutchouc de liaison (50) s'étend dans une direction circonférentielle du bandage pneumatique (S), et au moins une des plusieurs parties de renforcement du caoutchouc de liaison (50) s'étend dans une direction coupant la direction circonférentielle du bandage pneumatique (S).

**2.** Bandage pneumatique selon la revendication 1, dans lequel le module en présence d'un allongement à 100% de la couche de caoutchouc de liaison ($A_M$) et le module en présence d'un allongement à 100% d'une partie circonférentielle interne de la bande de roulement ($B_M$) satisfont la relation de l'équation (i) ci-dessous :

$$\text{équation (i)} \quad 60\% \leq A_M/B_M \leq 140\%.$$

**3.** Procédé de fabrication d'un bandage pneumatique, comprenant les étapes-ci-dessous :

agencement d'un caoutchouc de liaison non vulcanisé en une forme de couche au niveau d'une circonférence externe d'un élément de cadre du bandage pneumatique entièrement vulcanisé (12) ;
agencement d'une bande de roulement entièrement vulcanisée (16), incluant une partie de renforcement du caoutchouc de liaison (50) formée par un matériau de caoutchouc non vulcanisé identique au caoutchouc de liaison et s'étendant d'une surface de la bande de roulement (16A) vers une face arrière de la bande de roulement, au niveau d'une circonférence externe du caoutchouc de liaison ; et
vulcanisation du caoutchouc de liaison et du matériau de caoutchouc ; dans lequel :

plusieurs parties de renforcement du caoutchouc de liaison (50) sont agencées au niveau de la bande de roulement (16) ; et

au moins une des parties de renforcement du caoutchouc de liaison (50) s'étend dans une direction circonférentielle du bandage pneumatique (S), et au moins une des plusieurs couches de renforcement du caoutchouc de liaison (50) s'étend dans une direction coupant la direction circonférentielle (S).

FIG.1

FIG.2

FIG.3

FIG.4

**EP 3 006 230 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009269424 A
- JP 2011245881 A
- JP 2005280021 A